# EUROPÄISCHE PATENTANMELDUNG

(11) **EP 1 617 236 A1**
(43) Veröffentlichungstag der Anmeldung: **18.01.2006**
(21) Anmeldenummer: 04405457.5
(22) Anmeldetag: 16.07.2004
(51) Int. Cl.: G01T 1/20

(54) **Röntgenrezeptor zur elektronischen Erfassung eines Röntgenbildes**

(71) Anmelder: Miradis Holding AG, 6052 Hergiswil (CH)
(72) Erfinder: Zerrer, Ingo, 76332 Bad Herrenalb (DE)
(74) Vertreter: Frei Patent Attorneys

(57) **Zusammenfassung**

Ein Röntgenrezeptor (1) zur elektronischen Erfassung eines Röntgenbildes mit einem Konverterschirm (2) zur Umwandlung von Röntgenstrahlen in sichtbares Licht und weist mehrere optische Abbildungssysteme (3, 3') zur Abbildung von Teilbereichen (21, 21') mit Teilbildern des Konverterschirms (2) auf.

In einem ersten Abbildungssystem (3) lenkt ein erstes Reflektionsmittel das Licht eines zugeordneten ersten Teilbereiches (21) in eine erste Reflektionsrichtung um, und in einem zweiten Abbildungssystem (3') lenkt ein zweites Reflektionsmittel (31') das Licht eines zweiten Teilbereiches (21') in eine zweiten Reflektionsrichtung um.

Dabei verlaufen, vom Konverterschirm (2) aus betrachtet, die erste und zweite Reflektionsrichtung im wesentlichen parallel zueinander aber in entgegengesetzter Richtung, und sind die beiden Reflektionsmittel (31, 31') in einer Richtung senkrecht zu den beiden Reflektionsrichtungen in einer X-förmigen Anordnung gegeneinander versetzt angeordnet.

In einem Verfahren zur Ansteuerung eines Röntgengerätes wird zumindest ein Anteil einer Strahlungsmenge, die durch einen Spalt (4) zwischen den Abbildungssystemen (3, 3') tritt, gemessen, und wird die Steuerung des Röntgengerätes nach Massgabe des gemessenen Strahlungsanteils beeinflusst.

## Beschreibung

Die Erfindung bezieht sich auf das Gebiet der Röntgentechnik, insbesondere auf die elektronische Erfassung von Bildern, die auf einem Konverterschirm vorliegen. Sie bezieht sich auf einen Röntgenrezeptor zur elektronischen Erfassung eines Röntgenbildes und ein Verfahren zur Ansteuerung eines Röntgengerätes gemäss dem Oberbegriff der entsprechenden unabhängigen Patentansprüche.

### STAND DER TECHNIK

Bei einem Röntgenrezeptor zur elektronischen Erfassung eines Röntgenbildes ist ein Konverterschirm, beispielsweise eine Szintillationsfolie oder ein Phosphorschirm, im Strahlengang eines Röntgengerätes angeordnet. Der Konverterschirm wandelt die auftreffenden Röntgenstrahlen in sichtbares Licht um, und erzeugt damit ein Schirmbild eines im Strahlengang vor dem Schirm liegenden Körpers.

In bekannten Geräten zur elektronischen Erfassung des Bildes des Konverterschirms wird das Bild durch ein oder mehrere Bildwandler, beispielsweise CCD-Arrays, in ein elektronisches Signal zur weiteren elektronischen Verarbeitung wie Digitalisierung, Speicherung etc. umgewandelt. Zur Erhöhung der Auflösung werden einzelne Bereiche oder Bildsegmente durch separate CCD-Wandler erfasst. Damit die Abbildung des Schirmbildes auf den Bildwandler möglichst wenig Raum einnimmt, sind verschiedene optische Anordnungen vorgeschlagen worden.

In US 6,353,657 wird die Anordnung von zwei Spiegeln vorgeschlagen, welche Spiegel gleich orientiert und gegeneinander versetzt jeweils eine Hälfte des Schirmbildes erfassen und, gegebenenfalls über weitere Spiegel, zu zwei Kameras führen.

Gemäss WO 97/20231 sind zwei Spiegel in eine V-förmigen Anordnung entlang einer Mittelachse des Konverterschirms angeordnet, wobei das spitze Ende des V zum Schirm hin orientiert ist und die beiden Spiegel das Licht des Schirmes in annähernd entgegengesetzte Richtungen annähernd parallel umlenken. Um den Schirmbereich entlang der Mittelachse abbilden zu können, muss der Winkel zwischen den Spiegeln etwas grösser als 90 Grad sein, wodurch sich eine Verzerrung der Abbildung ergibt.

### DARSTELLUNG DER ERFINDUNG

Es ist Aufgabe der Erfindung, einen Röntgenrezeptor zur elektronischen Erfassung eines Röntgenbildes eingangs genannten Art zu schaffen, welche weniger Raum einnimmt als bisher bekannte Anordnungen.

Eine weitere Aufgabe der Erfindung ist, einen Röntgenrezeptor zur elektronischen Erfassung eines Röntgenbildes eingangs genannten Art zu schaffen, welche eine möglichst verzerrungsarme Abbildung ermöglichen.

Eine weitere Aufgabe der Erfindung ist, einen Röntgenrezeptor und ein Verfahren zur Ansteuerung eines Röntgengerätes zu schaffen, welche eine ausgeglichene Belichtungsmessung und Belichtungssteuerung ermöglichen.

Diese Aufgabe lösen ein Röntgenrezeptor zur elektronischen Erfassung eines Röntgenbildes und ein Verfahren zur Ansteuerung eines Röntgengerätes mit den Merkmalen der entsprechenden unabhängigen Patentansprüche.

Der erfindungsgemässe Röntgenrezeptor weist also mehrere optische Abbildungssysteme auf, wobei
- in einem ersten Abbildungssystem ein erstes der mindestens zwei Reflektionsmittel das Licht eines zugeordneten ersten Teilbereiches in eine erste Reflektionsrichtung umlenkt, und
- in einem zweiten Abbildungssystem ein zweites der mindestens zwei Reflektionsmittel das Licht eines zugeordneten zweiten Teilbereiches in eine zweiten Reflektionsrichtung umlenkt.
Dabei verlaufen, vom Konverterschirm aus betrachtet, die erste und zweite Reflektionsrichtung im wesentlichen parallel zueinander aber in entgegengesetzter Richtung, und sind die beiden Reflektionsmittel in einer Richtung senkrecht zu den beiden Reflektionsrichtungen gegeneinander versetzt angeordnet.

Mit anderen Worten gesagt, sind also die erste und zweite Reflektionsrichtung, bei Parallelprojektion auf eine Ebene parallel zum Konverterschirm, im wesentlichen parallel zueinander aber in entgegengesetzte Richtungen gerichtet, und sind die beiden Reflektionsmittel oder Hauptspiegel in einer Richtung senkrecht zu den beiden Reflektionsrichtungen gegeneinander versetzt angeordnet. Vorzugsweise verlaufen die erste und zweite Reflektionsrichtung zudem zumindest annähernd parallel zur Ebene des Konverterschirms.

Die verwendeten Ausdrücke betreffend die "Richtung von Licht", "Reflektionsrichtung" etc. beziehen sich jeweils auf die Richtung einer optische Achse, d.h. eines zentralen Strahls des Lichtbündels, das durch das Abbildungssystem von der abzubildenden Fläche auf die Umwandlungsmittel abgebildet wird.

Die beschriebene Anordnung der Hauptspiegel erlaubt, die Abbildungssysteme insgesamt platzsparend anzuordnen. Durch einerseits die in Gegenrichtungen umgelenkten Strahlen der Teilbereiche des Konverterschirms und andererseits die senkrecht dazu versetze Anordnung der Hauptspiegel kann der Raumbedarf insgesamt verringert werden.

In einer bevorzugten Ausführungsform der Erfindung weisen die Abbildungssysteme jeweils ein weiteres Reflektionsmittel respektive einen Sekundärspiegel auf. Der Sekundärspiegel reflektiert das Licht des jeweiligen Abbildungssystems, wiederum bei Parallelprojektion auf eine Ebene parallel zum Konverterschirm betrachtet, um annähernd einen rechten Winkel. Dadurch wird der Platzbedarf weiter verringert. Vorzugsweise wird das Licht eines bestimmten Abbildungssystems jeweils in Richtung eines gegenüberliegenden Abbildungssystems reflektiert.

Vorzugsweise verläuft das Licht des ersten Abbildungssystems nach Reflektion durch den Sekundärspiegel des ersten Abbildungssystems in eine dritte Richtung, und verläuft das Licht des zweiten Abbildungssystems nach Reflektion durch den Sekundärspiegel des zweiten Abbildungssystems in eine vierte Richtung, und verlaufen die dritte und vierte Richtung, bei Parallelprojektion auf eine Ebene parallel zum Konverterschirm, im wesentlichen parallel zueinander aber in entgegengesetzter Richtung

Der beschriebene Strahlengang ermöglicht es nun, gemäss einer weiteren bevorzugten Ausführungsform der Erfindung, jeweils einen Teilbereich oder einen Abschnitt eines Abbildungssystems hinter einem anderen der Abbildungssysteme anzuordnen. Es ist vorzugsweise, vom Konverterschirm aus gesehen, jedes der Abbildungssysteme in einem ersten Bereich vor einem der anderen Abbildungssysteme und in einem zweiten Bereich hinter einem der anderen Abbildungssysteme angeordnet

Anders formuliert liegt jeweils ein Teil des Volumens eines Abbildungssystems in einem ersten Bereich vor einem Volumen eines anderen Abbildungssystems und in einem zweiten Bereich hinter einem Volumen eines anderen Abbildungssystems. Dabei umfasst das Volumen eines Abbildungssystems die zugeordneten Reflektionsmittel und Umwandlungsmittel, sowie das durch den Strahlengang des Abbildungssystems umfasste Raumvolumen. Falls nur zwei Abbildungssysteme vorhanden sind, so ist das "andere Abbildungssystem" in beiden Fällen dasselbe. Die Abbildungssysteme können durch Rotation um eine zentrale Achse, welche im wesentlichen senkrecht durch einen Mittelpunkt des Konverterschirmes verläuft, ineinander übergeführt werden.

Vorzugsweise ist das Umwandlungsmittel eines Abbildungssystems eine elektronische Kamera mit Wandler und Optik, und ist die Kamera hinter dem Primärspiegel eines anderen respektive des anderen Abbildungssystems angeordnet.

Die beschriebene Anordnung der Hauptspiegel erlaubt ferner, zwischen den Hauptspiegeln einen Spalt anzuordnen, indem beispielsweise die Hauptspiegel trapezförmig geformt sind. Da die Hauptspiegel das Licht in entgegengesetzte Richtungen reflektieren, ist eine längere Seite des ersten Hauptspiegels entlang einem ersten Rand des Konverterschirmes und beliebig nahe am Konverterschirm angeordnet, beispielsweise unmittelbar angrenzend, und ist eine kürzere Seite des ersten Hauptspiegels parallel zur längeren Seite aber weiter vom Konverterschirm entfernt. Umgekehrt ist eine längere Seite des zweiten Hauptspiegels entlang einem zweiten Rand des Konverterschirmes und beliebig nahe am Konverterschirm angeordnet, wobei der zweite Rand dem ersten Rand gegenüberliegt. Die beiden Hauptspiegel bilden also, in eine Richtung parallel zum ersten oder zweiten Rand des Konverterschirms betrachtet, eine sich überkreuzende oder X-förmige Anordnung.

Dabei sind die Hauptspiegel jeweils im oberen Teil, also dem Schirm zugewandten Teil des X breiter und im unteren Teil, also vom Schirm abgewandten Teil, schmaler, wodurch ein Spalt zwischen den beiden Hauptspiegeln resultiert.

Ein in diesem Spalt angeordneter Detektor kann grundsätzlich Röntgenstrahlen aus einem zum Spalt parallelen, durch die Mitte des Konverterschirms verlaufenden Streifen oder Band des Konverterschirms empfangen. Er kann stattdessen auch Licht von der gesamten Oberfläche des Konverterschirms empfangen. Anhand von einer derart empfangenen Strahlungsintensität von Licht oder Röntgenstrahlung kann auf eine Steuerung des Röntgenrezeptors und/oder der Röntgenquelle eingewirkt werden. Da der Detektor oder Umlenkmittel zum Detektor in der Mitte zwischen den Spiegeln angeordnet ist, ist eine verzerrungsarme Messung der Intensität von Licht oder Röntgenstrahlen um die Mitte des Konverterschirms möglich. Dies ist von Vorteil, da in der Regel die Information um die Bildmitte von Interesse ist und eine optimale Belichtung erfordert.

In einer bevorzugten Ausführungsform der Erfindung wirkt der Detektor auf eine Auslöseschaltung, welche beim Detektieren einer bestimmten Lichtmenge ein Auslesen der Umwandlungsmittel auslöst.

In einer weiteren bevorzugten Ausführungsform der Erfindung ist der Röntgenrezeptor Teil eines Röntgensystems. Der Detektor wirkt auf eine Steuerung einer Röntgenquelle des Röntgensystems, indem die Intensität der Quelle nach Massgabe der detektierten Strahlung gesteuert wird ("Automatic Exposure Control"). In einer einfachen Variante dieser Ausführungsform wird beim Überschreiten einer vorgegebenen Lichtmenge die Röntgenquelle abgestellt.

Der Detektor kann auch auf einen Teilbereich des Konverterschirms gerichtet sein, das heisst, dass er nur oder vorwiegend Licht aus diesem Teilbereich empfängt. Der Teilbereich ist beispielsweise eine Mittelzone des Konverterschirm, oder ein in Richtung des Spaltes verlaufender Mittelstreifen des Konverterschirms.

Das Verfahren zur Ansteuerung eines Röntgengerätes misst also zumindest einem Anteil einer Strahlungsmenge, die durch den Spalt zwischen den Abbildungssystemen respektive deren Primärspiegel des Röntgenrezeptors tritt, und steuert die abgegebene Strahlung des Röntgengerätes und/oder die Kameras des Röntgenrezeptors entsprechend an.

Um den Detektor vor Einflüssen durch die Röntgenstrahlen zu schützen, ist in einer weiteren bevorzugten Ausführungsform der Erfindung ein Reflektionsmittel zur Reflektion von Licht vom Konverterschirm zum Detektor angeordnet. Dieses Reflektionsmittel des Detektors, oder Detektorspiegel, reflektiert das Licht in eine im Winkel zur Flächennormalen des Konverterschirms, vorzugsweise annähernd parallel zum Konverterschirm verlaufende Richtung. So kann der Detektor hinter einer Abschirmung montiert werden. Vor oder nach dem Detektorspiegel kann zusätzlich eine Optik zur Bündelung des Lichtes aus einem bestimmten Bereich des Konverterschirms angeordnet sein.

In einer weiteren bevorzugten Ausführungsform der Erfindung ist das Reflektionsmittel des Detektors kein separater Spiegel, sondern ist einer der Hauptspiegel an der dem Spalt zugewandten Kante mit einer verspiegelten Fläche versehen, die im Winkel zur Fläche des Hauptspiegels selber steht. Der Hauptspiegel und der Spiegel des Detektors sind also einstückig geformt. Es können auch beide Hauptspiegel derart ausgebildet sein, und so Licht zu zwei einander gegenüberliegenden Detektoren reflektieren.

Die Reflektionsmittel sind vorzugsweise aussenverspiegelte Spiegel, können aber auch mittels Prismen realisiert werden.

Das Gehäuse des Röntgenrezeptors weist vorzugsweise einen annähernd quaderförmigen Aufbau auf. Die Primärspiegel sind innerhalb des Gerätes schräg angeordnet und dabei auf durchgehenden Streben montiert, beispielsweise auf U-Profilen oder T-Profilen oder Rechteckprofilen. Diese Streben sind nicht nur zur Halterung der Primärspiegel sondern auch zur Versteifung des Gehäuses ausgeführt. Sie reichen deshalb vorzugsweise jeweils von einer Einfassung des Konverterschirms schräg und quer durch das Volumen des Gerätes bis zu der dem Konverterschirm gegenüberliegenden Gehäusewand. Durch die überkreuzte und versetzte Anordnung der Streben, entsprechend der Anordnung der Primärspiegel, ergibt sich eine starke Versteifung des Gehäuses und damit insbesondere des optischen Systems.

Der Konverterschirm ist in einer weiteren bevorzugten Ausführungsform der Erfindung als Teil einer abnehmbaren Frontblende ausgeführt. Die Frontblende weist einen Blendenrand auf, welcher nebst dem Konverterschirm vorzugsweise eine für Röntgenstrahlen durchlässige Schutz- und Deckplatte und optional eine Leiteinrichtung zur Elimination von Streustrahlung zusammenhält. Die Frontblende ist zusammen mit diesen Elementen als Ganzes abnehmbar am Gehäuse des Röntgenrezeptors montiert. Damit muss bei Reparatur- oder Wartungsarbeiten lediglich die Frontblende demontiert werden, worauf der Innenraum des Gerätes zugänglich ist.

In einer weiteren bevorzugten Ausführungsform der Erfindung ist der Röntgenrezeptor beweglich montiert, so dass er in eine Bildaufnahmeposition bezüglich eines Patienten gebracht werden kann. Dazu ist er mit einem Versorgungsschlauch versehen, welcher in einer Schlauchhülle eine elektrische Versorgungsleitung und eine Kommunikationsleitung aufweist, sowie Mittel zum Zuführen und Ableiten eines Kühlmittels. Das Kühlmittel wird zur Kühlung der CCD-Kameras verwendet, um deren Dunkelstrom zu reduzieren. Vorzugsweise ist das Zuführmittel ein innerhalb der Schlauchhülle in etwa konzentrisch verlaufender weiterer Schlauch, und dient der Zwischenraum zwischen diesem weiteren Schlauch und der Schlauchhülle zur Ableitung des Kühlmittels. Vorzugsweise sind auch die Versorgungsleitung und die Kommunikationsleitung in diesem Zwischenraum angeordnet.

Dadurch ist es möglich, mit kleinem Aufwand eine Ableitung des Kühlmittels zur erreichen, und gleichzeitig durch das Gegenstromprinzip ein Aufwärmen des zugeführten Kühlmittels entsprechend der Umgebungstemperatur zu verhindern. Das Kühlmittel ist vorzugsweise Luft, so dass insbesondere die Ableitung nicht völlig dicht gestaltet werden muss. Auch bei Luft als Kühlmittel ist eine Ableitung erforderlich, um Kondensation im Röntgenrezeptor zu verhindern.

In einer weiteren bevorzugten Ausführungsform der Erfindung ist der Konverterschirm nicht eben, sondern leicht nach aussen bombiert respektive gewölbt ausgeführt, vorzugsweise zumindest annähernd sphärisch. Dadurch werden Abbildungsfehler wenigstens zum Teil kompensiert und müssen nicht durch softwaremässige Nachbearbeitung von erfassten Bilddaten eliminiert werden.

In weiteren bevorzugten Ausführungsformen der Erfindung ist der Konverterschirm mit Mitteln zur Ausrichtung und zur gerichteten Abstrahlung des emittierten sichtbaren Lichtes versehen. Diese Mittel werden vorzugsweise durch ein flächiges Raster von Mikrolinsen gebildet, welches sich über die Fläche des Konverterschirms erstreckt. Jede der Mikrolinsen kollimiert oder konzentriert das von einem zugeordneten Bereich des Konverterschirms abgestrahlte Licht zumindest teilweise in eine bevorzugte Abstrahlrichtung und erhöht so die Lichtausbeute der Abbildungssystems.

In einer anderen bevorzugten Ausführungsform der Erfindung weist das Material des Konverterschirms eine innere Struktur auf, welche emittiertes Licht bündelt und gerichtet in eine bevorzugte Richtung vorzugsweise annähernd senkrecht zur Ebene des Konverterschirms abstrahlt. Eine solche innere Struktur ist beispielsweise eine Nadelstruktur von Kristallen des Leuchtstoffes, wie sie beispielsweise beschrieben ist im Artikel "Innovationen bei ausgereiften Produkten am Beispiel des Röntgen-Lichtverstärkers" von R. Behrens, electromedica 70 (2002) Heft 1, Seiten 97-103. Solche senkrecht zur Konverterebene stehenden Nadeln wirken als Lichtleiter und führen das Licht an die Konverteroberfläche Dadurch lassen sich dickere Leuchtstoffschichten mit einer besseren Strahlungsumwandlung erstellen.

In einer weiteren bevorzugten Ausführungsform der Erfindung wird eine Verarbeitung der elektronischen Bildsignale im Röntgenrezeptor selber durchgeführt. Dazu weist der Röntgenrezeptor entsprechende Mittel zur Digitalisierung, Speicherung und Verarbeitung von Bildsignalen auf. Zur Verarbeitung kann ein konventioneller "embedded" respektive eingebetteter Prozessor mit Speichermitteln eingesetzt werden, oder ein speziell für die vorliegenden Bildbearbeitungsaufgaben wie Entzerrung, Zusammensetzen von Bildern, Korrektur von Sensorfehlern etc. entwickelter ASIC (Application Specific Integrated Circuit).

Die vorliegende Beschreibung erklärt das Prinzip der Erfindung anhand eines rechteckigen Konverterschirmes und von vorzugsweise trapezförmigen Spiegel. Es ist jedoch selbstverständlich dass dieselbe optische Anordnung und gleich gerichtete Strahlengänge mit anders geformten optischen Elementen unter Wahrung des Prinzips der Erfindung erzielt werden können.

Weitere bevorzugte Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figuren 1 bis 3: verschiedene Ansichten eines Röntgenrezeptors gemäss der Erfindung;
- Figur 4: einen Röntgenrezeptor mit vier Abbildungssystemen;
- Figur 5: einen Röntgenrezeptor mit modular zusammengesetzten Abbildungssystemen;
- Figuren 6 bis 8: Anordnungen von Detektoren zur Belichtungsmessung;
- Figur 9: einen Querschnitt durch eine Frontblende;
- Figur 10: einen Konverterschirm mit Mikrolinsen; und
- Figur 11: einen Querschnitt durch einen Versorgungsschlauch.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

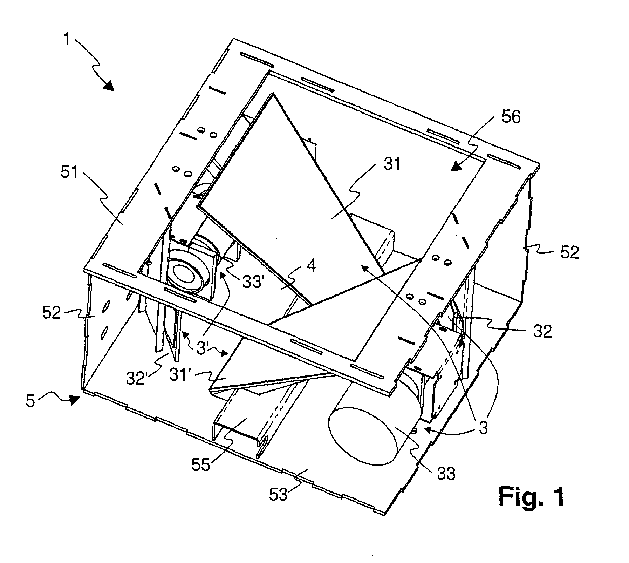

**Die Figuren 1 bis 3** zeigen verschiedene perspektivische Ansichten eines Röntgenrezeptors 1 gemäss der Erfindung. Der Röntgenrezeptor 1 weist einen im wesentlichen rechteckigen Konverterschirm 2 zur Umwandlung von Röntgenstrahlen in sichtbares Licht auf. Einander überlappende Teilbereiche 21, 21' des Konverterschirms 2 werden durch jeweils zugeordnete Abbildungssysteme 3, 3' auf Kameras 33, 33' abgebildet, wo durch Umwandlungsmittel wie beispielsweise CCD-Arrays elektronisch weiter verarbeitbare Bildsignale zur Repräsentation einer Ansicht des jeweiligen Teilbereichs 21, 21' erzeugbar sind.

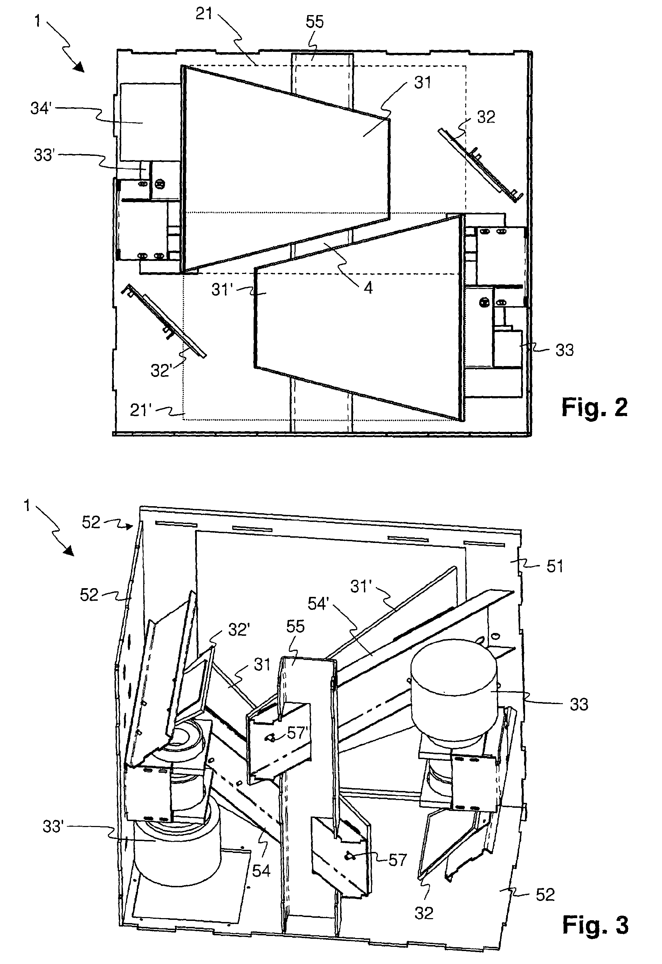

In den **Figuren 1** bis **3** ist der Konverterschirm 2 der Klarheit halber nicht eingezeichnet, und sind auch je nach Ansicht einzelne Seitenwände 52 oder der Boden 53 weggelassen. Der Konverterschirm 2 ist in einer Gehäusefront mit einer Einfassung 51 angeordnet, und eine wirksame Fläche des Konverterschirms 2 entspricht im wesentlichen einer Öffnung 56 in dieser Einfassung 51. In der **Figur 2** sind die Teilbereiche 21, 21' durch strichlierte Linien angedeutet.

Ein Abbildungssystem 3 weist einen Primärspiegel 31 und einen Sekundärspiegel 32 auf, welche Licht von einem Teilbereich 21 des Konverterschirms 2 zu einer Kamera 33 führen. Analog dazu weist ein weiteres Abbildungssystem 3' einen weiteren Primärspiegel 31', einen weiteren Sekundärspiegel 32' und eine weitere Kamera 33' auf.

Die Primärspiegel 31, 31' sind jeweils in einem Winkel von vorzugsweise annähernd 45 Grad zu einer Ebene des Konverterschirms 2 angeordnet. Ferner beträgt ein Winkel zwischen den Primärspiegeln 31, 31' annähernd 90 Grad. Der Primärspiegel 31 ist trapezförmig, wobei die längere Seite der beiden parallelen Seiten des Trapezes in der Nähe eines ersten Randes des Konverterschirms 2 und parallel zu diesem ersten Rand verläuft. Die längere Seite des weiteren Primärspiegels 31' verläuft parallel und nahe zum gegenüberliegenden Rand des Konverterschirms 2.

Die beiden Primärspiegel 31, 31' sind in der Richtung dieses Randes gegeneinander versetzt, das heisst dass die längere Seite des Primärspiegels 31 sich entlang des ersten Randes vom Bereich einer ersten Ecke bis ungefähr in einen Mittenbereich des ersten Randes erstreckt, und dass die längere Seite des weiteren Primärspiegels 31' sich entlang des gegenüberliegenden Randes vom Bereich einer zweiten Ecke bis ungefähr in einen Mittenbereich des gegenüberliegenden Randes erstreckt. Dabei liegen sich die erste und zweite Ecke bezüglich des Konverterschirms 2 diagonal gegenüber.

Die Primärspiegel 31, 31' lenken senkrecht vom Konverterschirm 2 abgestrahlte Lichtstrahlen in eine im wesentlichen parallel zum Konverterschirm 2 verlaufende Richtung um. Die derart abgelenkten Strahlen werden durch die entsprechenden Sekundärspiegel 32, 32' zur entsprechenden Kamera 33, 33' umgelenkt. Die von einem Teilbereich 21, 21' des Konverterschirms 2 ausgehenden und in die entsprechende Kamera 33, 33' geführten Strahlen bilden einen Strahlengang und beanspruchen ein Volumen des entsprechenden Abbildungssystems 3, 3'.

Die Strahlengänge der beiden Abbildungssysteme 3, 3' liegen also, vom Konverterschirm 2 aus gesehen, stellenweise hintereinander, wobei an einer Stelle der erste Strahlengang vor dem zweiten, und an einer gegenüberliegenden Stelle der zweite Strahlengang vor dem ersten liegt. Die Strahlengänge bilden also quasi einen Teil einer schraubenförmigen oder spiralförmigen Anordnung. Es ist dabei die Kamera 33 zumindest teilweise hinter dem weiteren Primärspiegel 31' und umgekehrt die weitere Kamera 33' zumindest teilweise hinter dem Primärspiegel 31 angeordnet.

Vor den Kameras 33, 33' ist zum Schutz vor den Röntgenstrahlen jeweils eine Abschirmung 34, 34' angeordnet. Die Abschirmung 34, 34' ist an der Kamera 33, 33', oder als Teil des Kameragehäuses angeordnet, und/oder am davor liegenden Primärspiegel 31, 31', beispielsweise durch eine Schicht auf der Rückseite des Primärspiegels 31. 31'. Alternativ oder zusätzlich kann auch ein lichtdurchlässiges aber für Röntgenstrahlen opakes Material aus zum Beispiel Bleiglas hinter dem Konverterschirm 2 und parallel zu diesem angeordnet werden. Es können auch die vorne verspiegelten Primärspiegel 31, 31' selber aus Bleiglas gefertigt sein. In den **Figuren 1** und **3** ist keine separate Abschirmung 34, 34' eingezeichnet. In der **Figur 2** ist beispielhaft eine Platte zur Abschirmung 34' des röntgenstrahlempfindlichen Elektronikteils der weiteren Kamera 33' eingezeichnet. Die Platte 34' ist über der weiteren Kamera 33' und teilweise unter dem Primärspiegel 31 angeordnet. Für die im Strahlengang vor den Kameras 33, 33' liegende Objektive ist in der Regel keine Abschirmung erforderlich.

Dadurch dass die Kameras 33, 33', insbesondere die röntgenstrahlempfindlichen Teile wie die CCD-Arrays und zugordnete Elektronik, vollständig abgeschirmt sind, ist auch bei einer fehlerhaften Ausrichtung des Röntgenrezeptors 1 bezüglich der Röntgenstrahlquelle eine Beschädigung der Kameras 33, 33' durch die Röntgenstrahlen ausgeschlossen.

Der Konverterschirm 2 ist beispielsweise ein Phosphorschirm oder eine Szintillationsfolie, mit einem Fluoreszenzleuchtstoff wie z.B. ZnS, CsI, CsI:Na oder CsI:Tl, sowie CaWO4 (Scheelit), LaOBr:Tb oder Gd2O2S:Tb. Die Wahl des Leuchtstoffes richtet sich nach einer spektralen Empfindlichkeit des verwendeten CCD-Arrays. Da CCD-Sensoren in der Regel die grösste Empfindlichkeit im Bereich grüb/gelb bis rot aufweisen, sind CsL:TL und Gd2O2S:Tb bevorzugt.

In einem beispielhaften System weist der Konverterschirm 2 eine wirksame Grösse von ca. 360 mal 440 mm auf, und überlappen sich die beiden Teilbereiche 21 um ca. 41 mm. Eine Kameralinse ist entlang einer optischen Achse des entsprechenden Abbildungssystems 3 um 400 mm vom Mittelpunkt des Teilbereichs 21 entfernt. Der Blickwinkel der Kamera 33 beträgt somit ca. zwei mal 28.5 Grad. Die CCD Kamera 33 hat beispielsweise eine Auflösung von 2048 mal 3072 Pixeln.

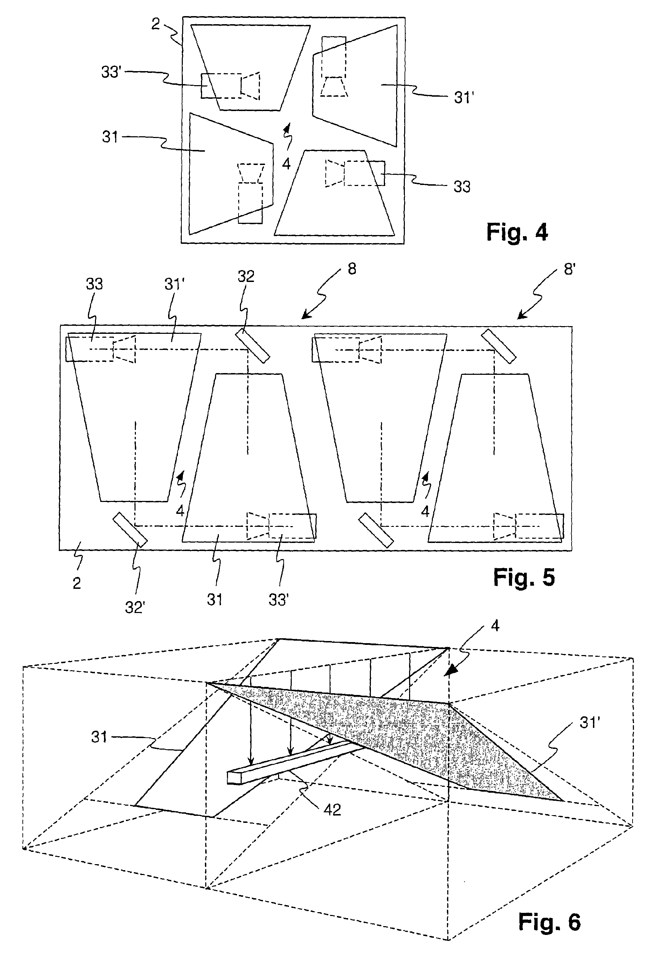

Dasselbe Prinzip der Erfindung ist auch mit vier Abbildungssystemen 3 realisierbar, wobei der Strahlengang vorzugsweise ohne einen Sekundärspiegel nur durch einen Primärspiegel von einem Teilbereich des Konverterschirms 2 zu einer Kamera gelenkt wird. Dabei liegt jede der Kameras jeweils hinter dem Primärspiegel eines nachfolgenden Abbildungssystems. **Figur 4** zeigt schematisch eine Aufsicht aus Richtung des Konverterschirms 2 auf die wesentlichen Elemente der vier Abbildungssysteme 3. Bei einer solchen Anordnung kann es notwendig sein, dass die optische Achse der Abbildungssysteme nach der Reflektion durch die Primärspiegel 31, 31' nicht im wesentlichen parallel zum Konverterschirm 2 sondern in einem spitzen Winkel vom Konverterschirm 2 wegführen, und dementsprechend auch die Kameras 33, 33' zum Konverterschirm 2 hin geneigt sind.

Figur 5 zeigt schematisch einen Röntgenrezeptor mit modular zusammengesetzten Abbildungssystemen. Es bilden jeweils zwei Abbildungssysteme 3, 3' wie oben beschrieben ein Modul 8, und weitere Abbildungssysteme ein weiteres Modul 8'. Die Abbildungssysteme 3 eines Moduls 8, 8' sind vorzugsweise jeweils vollständig in einem Volumen enthalten, das sich durch eine senkrechte Projektion der zugeordneten Fläche des Konverterschirms 2 nach hinten ergibt. Die beiden Module 8, 8' sind nebeneinander angeordnet, so dass sie zusammen eine annähernd doppelt so grosse Schirmfläche 2 wie ein einzelnes Modul abbilden. Diese Anordnung kann linear oder auch in eine zweite Achsrichtung schachbrettartig fortgesetzt werden.

Die Spiegel 31, 31', 32, 32' sind jeweils an der dem Strahlengang zugewandten Seite verspiegelt. Die Primärspiegel 31, 31' sind jeweils an einer Strebe 54, 54' befestigt. Die Streben 54, 54' versteifen das Gehäuse 5 und die Optik. Sie sind zur weiteren Versteifung durch ein parallel zum Boden 53 verlaufendes Versteifungsprofil 55 miteinander verbunden. Zum Ausgleich von unterschiedlichen Ausdehnungskoeffizienten von Primärspiegel 31, 31' und Streben 54, 54' sind die Primärspiegel 31, 31' an einem Ende fest an der entsprechenden Strebe 54, 54' befestigt, und am anderen Ende verschiebbar. Die feste Verbindung kann beispielsweise durch Kleben oder mittels eines doppelseitigen Klebebandes hergestellt werden. Die verschiebbare Verbindung ist beispielsweise durch einen am jeweiligen Primärspiegel 31, 31' befestigten Stift 57, 57' realisiert, der in einem Schlitz in der entsprechenden Strebe 54, 54' verschiebbar angeordnet ist.

Durch die versetzte Anordnung der Primärspiegel 31, 31' und die Trapezform der Primärspiegel 31, 31' kann ohne Beeinflussung der Abbildungssysteme 3, 3' - in Richtung senkrecht zum Konverterschirm 2 betrachtet - ein Spalt zwischen den Primärspiegeln 31, 31' angeordnet werden. Dieser Spalt erlaubt eine Anordnung eines Detektors 42 zur Messung einer Bildintensität in einem Mittenbereich des Konverterschirms 2.

**Figuren 6** bis **8** zeigen schematisch das Funktionsprinzip verschiedener bevorzugter Ausführungsformen der Erfindung, welche den Spalt 4 in Verbindung mit einem Detektor 42 nutzen. Es sind nur die zur Erklärung notwendigen Teile gezeichnet, sowie strichlierte Hilfslinien zur Veranschaulichung der geometrischen Verhältnisse. Zum Detektor 42 führende Strahlen sind durch Pfeile angedeutet. Der Klarheit halber sind vorwiegend Strahlen von einer Mittellinie des Konverterschirms 2 ausgehend eingezeichnet, es fallen aber natürlich auch Lichtstrahlen aus anderen Bereichen des Konverterschirms 2 auf den Spalt 4 respektive den Detektor 42 respektive die Detektoroptik.

**Figur 6** zeigt einen im Spalt angeordneten linearen Detektor 42. Der Detektor 42 ist vorzugsweise empfindlich auf sichtbares Licht. Durch eine eigene Optik kann er auf die Erfassung von Licht aus einem schmalen oder einem breiten Band durch die Mitte des Konverterschirms 2 ausgerichtet sein. Anstelle eines linearen Detektors 42 kann auch ein quasi punktförmiger Detektor 42 eingesetzt werden, der wiederum durch eine Vorsatzoptik Licht von einen kleineren oder grösseren Bereich um die Mitte des Konverterschirms 2 empfängt.

In einer anderen Ausführungsform der Erfindung ist der Detektor 42 zur Messung einer Intensität von Röntgenstrahlen ausgelegt, wiederum entweder als punktförmiger oder als linearer Sensor. Damit ist eine direkte Messung der Strahlung in der interessierenden Bildmitte möglich, ohne dass die Abbildungsoptik tangiert wird oder suboptimal ausgelegt werden muss. Ein Detektor von Röntgenstrahlen erfasst vor allem senkrecht durch den Konverterschirm 2 fallende Strahlen, währenddem ein Lichtdetektor sichtbares Licht von einem grösseren Bereich des Konverterschirms 2 sammeln kann.

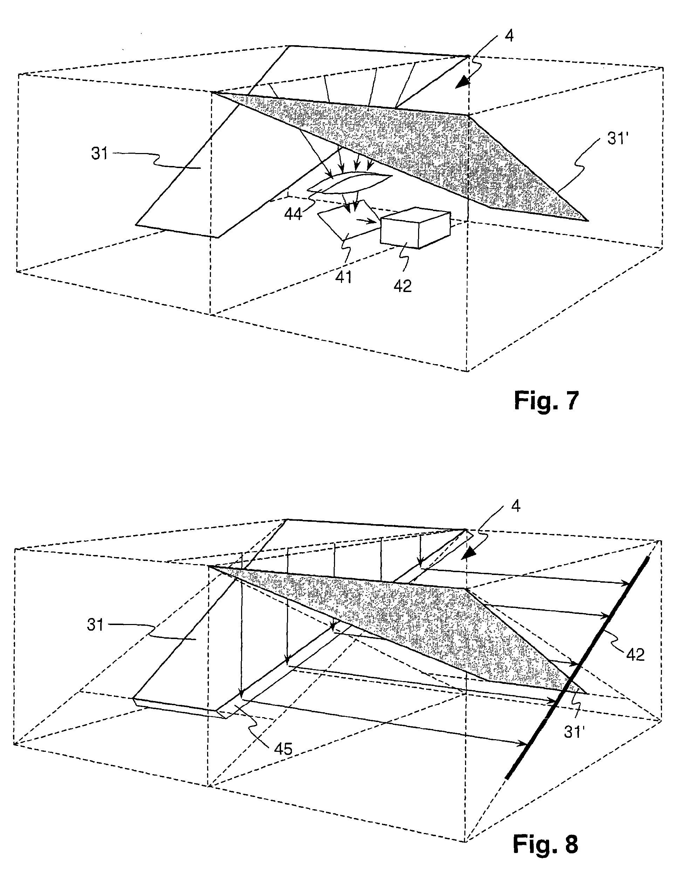

**Figur 7** zeigt eine Fokussierung und Umlenkung von Licht auf einen abgeschirmten Detektor 42. Dies geschieht durch eine Detektoroptik, welche eine Sammellinse 44 und einen Detektorspiegel 41 aufweist.

**Figur 8** zeigt eine Umlenkung von Licht auf einen linearen Detektor 42. Die Umlenkung geschieht dabei nicht durch einen separat hergestellten und montierten Spiegel, sondern durch eine als Teil eines der Primärspiegel 31 ausgebildete verspiegelte Fläche. Dazu weist eine dem Spalt 4 zugewandte Kante eines der Primärspiegel 31 eine in einem Winkel zur Fläche des Primärspiegels 31 angeordnete Kantenfläche 45 auf. Diese Kantenfläche 45 ist wie die Spiegelfläche aussen verspiegelt und reflektiert so einen Teil des Lichtes des Konverterschirms 2 in eine Richtung annähernd parallel zur Ebene des Primärspiegels 31, am weiteren Primärspiegel 31' vorbei auf den Lineardetektor 42. Der Lineardetektor 42 ist der Einfachheit halber nur als dicke Linie dargestellt.

In einer weiteren bevorzugten Ausführungsform der Erfindung ist analog auch eine Kante des weiteren Primärspiegels 31' als Spiegelfläche ausgebildet und reflektiert Licht in eine Gegenrichtung zu einem dem Detektor 42 bezüglich des Spaltes 4 gegenüberliegenden und entgegengesetzt geneigten weiteren Detektor.

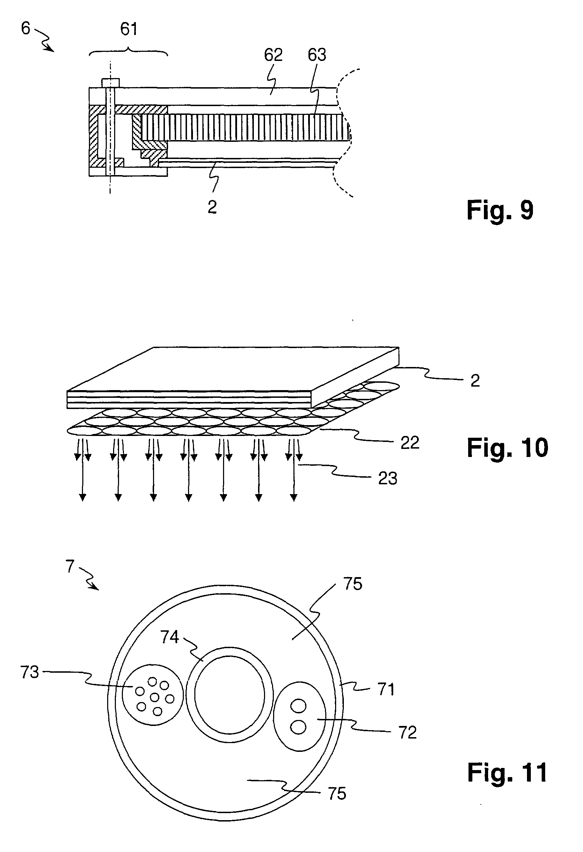

**Figur 9** zeigt einen Querschnitt durch einen Randbereich einer Frontblende 6. Die Frontblende 6 weist einen Blendenrand 61 auf. Der Blendenrand 61 hält eine für Röntgenstrahlen durchlässige Schutzplatte oder Deckplatte 62, ein Streustrahlengitter 63 und den Konverterschirm 2 zusammen. Das Streustrahlengitter 63 wirkt als Leiteinrichtung, welche vorwiegend senkrecht auftreffende Röntgenstrahlen durchlässt. Das Streustrahlengitter 63 kann auch als Untereinheit in die Frontblende 6 einschiebbar gestaltet sein, so dass ein Betrieb des Röntgenrezeptors 1 mit oder ohne Streustrahlengitter 63 möglich ist. Die Frontblende 6 ist als Ganzes respektive als Montageeinheit vom übrigen Gehäuse 5 des Röntgenrezeptors 1 entfernbar.

**Figur 10** zeigt schematisch einen Ausschnitt aus einem Konverterschirm 2 mit einem dahinter angeordneten Raster von Mikrolinsen 22 zur Ausrichtung von Lichtstrahlen 23. Die Mikrolinsen weisen beispielsweise Aperturen im Bereich von 10 bis 100 Mikrometern auf. Sie sind aus Glas oder Kunststoff gefertigt, wobei Kunststoffe gewählt werden, die nicht durch die Röntgenstrahlen degradiert werden.

In einer bevorzugten Ausführungsform der Erfindung sind die optischen Eigenschaften der Mikrolinsen entsprechend dem Strahlengang des jeweiligen Abbildungssystems 3, 3' gestaltet: eine in der Mitte eines Teilbereichs 21 liegende Mikrolinse kollimiert ihr Licht senkrecht zum Konverterschirm 2, und eine gegen den Rand eines Teilbereichs 21 liegende Mikrolinse lenkt das abgestrahlte Licht in Richtung der (reflektierten) Kamera 33, also leicht gegen die Mitte des Strahlenganges.

Alternativ oder zusätzlich zur Verwendung von Mikrolinsen kann zur gerichteten Abstrahlung auch ein Leuchtstoff verwendet werden, der selber in sich strukturiert ist, beispielsweise durch parallel verlaufende und das Licht führende Kristallnadeln.

**Figur 11** zeigt einen Querschnitt durch einen Versorgungsschlauch 7. Dieser weist eine Schlauchhülle 71 auf, welche einerseits eine ausreichende Versteifung und andererseits eine genügende Flexibilität aufweist. Die Schlauchhülle 71 ist beispielsweise aus einem textilen Kunststoffmaterial gebildet, oder ist ein Panzerschlauch aus einer Metallspirale oder einem versteiften Metallgewebe. In der Schlauchhülle 71 angeordnet ist eine elektrische Versorgung 72, eine Kommunikationsleitung 73 wie beispielsweise ein USB-Kabel, und eine Kühlmittelzuführung 74. Die Kühlmittelzuführung 74 ist ein im wesentlichen konzentrisch zur Schlauchhülle 71 verlaufender Schlauch. Zwischen der Kühlmittelzuführung 74 und der Schlauchhülle 71 bleibt ein Zwischenbereich 75 oder Volumen, in welchem einerseits die elektrische Versorgung 72 und die Kommunikationsleitung 73 verlaufen, und durch welche andererseits ein Rückfluss des Kühlmediums stattfindet.

In einer vorteilhaften Ausführungsform der Erfindung sind im Zwischenbereich 75 Stützelemente oder Distanzierungselemente angeordnet, welche die Kühlmittelzuführung 74 annähernd mittig in der Schlauchhülle 71 halten. Die Distanzierungselemente sind beispielsweise sternförmig, durchbrochene Kunststoffringe, etc. Alternativ oder zusätzlich kann diese Beabstandung auch durch eine spiralartige Anordnung der elektrischen Versorgung 72 und der Kommunikationsleitung 73 um die Schlauchhülle 71 bewerkstelligt werden.

### BEZUGSZEICHENLISTE

- 1: Röntgenrezeptor
- 2: Konverterschirm
- 21,21': Teilbereich
- 22: Mikrolinsen
- 23: Lichtstrahlen.
- 3, 3': Abbildungssystem
- 31, 31': Primärspiegel
- 32, 32': Sekundärspiegel
- 33, 33': Kamera
- 34, 34': Abschirmung
- 4: Spalt
- 41: Detektorspiegel
- 42: Detektor
- 44: Detektorlinse
- 45: Kantenfläche
- 5: Gehäuse
- 51: Einfassung
- 52: Seitenwand
- 53: Boden
- 54: Strebe
- 55: Versteifungsprofil
- 56: Öffnung
- 57: Stift
- 6: Frontblende
- 61: Blendenrand
- 62: Deckplatte
- 63: Leiteinrichtung
- 7: Versorgungsschlauch
- 71: Schlauchhülle
- 72: elektrische Versorgung
- 73: Kommunikationsleitung
- 74: Kühlmittelzuführung
- 75: Zwischenbereich
- 8, 8': Modul

## Patentansprüche

1. Röntgenrezeptor (1) zur elektronischen Erfassung eines Röntgenbildes, mit einem Konverterschirm (2) zur Umwandlung von Röntgenstrahlen in sichtbares Licht und mehreren optischen Abbildungssystemen (3, 3') zur Abbildung von Teilbereichen (21, 21') mit Teilbildern des Konverterschirms (2) auf Umwandlungsmittel (33, 33') zur Erzeugung von elektrischen Signalen zur Repräsentation des jeweiligen Teilbildes, aufweisend mindestens zwei Reflektionsmittel (31, 31', 32, 32') zur Ablenkung von Lichtstrahlen, welche vom Konverterschirm (2) ausgehen, wobei
in einem ersten Abbildungssystem (3) ein erstes der mindestens zwei Reflektionsmittel (31) das Licht eines zugeordneten ersten Teilbereiches (21) in eine erste Reflektionsrichtung umlenkt, und
in einem zweiten Abbildungssystem (3') ein zweites der mindestens zwei Reflektionsmittel (31') das Licht eines zugeordneten zweiten Teilbereiches (21') in eine zweiten Reflektionsrichtung umlenkt,
**dadurch gekennzeichnet, dass**
vom Konverterschirm (2) aus betrachtet, die erste und zweite Reflektionsrichtung im wesentlichen parallel zueinander aber in entgegengesetzter Richtung verlaufen, und die beiden Reflektionsmittel (31, 31') in einer Richtung senkrecht zu den beiden Reflektionsrichtungen gegeneinander versetzt angeordnet sind.

2. Röntgenrezeptor (1) gemäss Anspruch 1, wobei bei zwei einander gegenüberliegenden Abbildungssystemen (3, 3') jedes der beiden Abbildungssysteme (3, 3') jeweils ein weiteres Reflektionsmittel (32, 32') zur Umlenkung des Lichtes in Richtung des gegenüberliegenden Abbildungssystems (3', 3) aufweist.

3. Röntgenrezeptor (1) gemäss Anspruch 2, wobei das Licht des ersten Abbildungssystems (3) nach Reflektion durch das weitere Reflektionsmittel (32) des ersten Abbildungssystems (3) in eine dritte Richtung verläuft, und
das Licht des zweiten Abbildungssystems (3') nach Reflektion durch das weitere Reflektionsmittel (32') des zweiten Abbildungssystems (3') in eine vierte Richtung verläuft, und
die dritte und vierte Richtung im wesentlichen parallel zueinander aber in entgegengesetzter Richtung verlaufen.

4. Röntgenrezeptor (1) gemäss einem der vorherigen Ansprüche, wobei, vom Konverterschirm (2) aus gesehen, jedes der Abbildungssysteme (3, 3') in einem ersten Bereich vor einem der anderen Abbildungssysteme (3', 3) und in einem zweiten Bereich hinter einem der anderen Abbildungssysteme (3, 3') angeordnet ist.

5. Röntgenrezeptor (1) gemäss einem der vorherigen Ansprüche, wobei zwischen dem ersten Reflektionsmittel (31) und dem zweiten Reflektionsmittel (31') ein Spalt (4) liegt.

6. Röntgenrezeptor (1) gemäss Anspruch 5, wobei ein Detektor (42) zur Aufnahme von mindestens einem Anteil von durch den Spalt (4) tretender Strahlung angeordnet ist.

7. Röntgenrezeptor (1) gemäss Anspruch 6, mit einem Detektor-Reflektionsmittel (41; 45) zur Reflektion von Licht, welches vom Konverterschirm (2) ausgeht und durch den Spalt (4) fällt, auf den Detektor (42).

8. Röntgenrezeptor (1) gemäss Anspruch 7, wobei das Detektor-Reflektionsmittel (45) eine an einem ersten oder zweiten Reflektionsmittel (31, 31') ausgebildete und im Winkel zur Hauptfläche des Reflektionsmittel stehende reflektierende Teilfläche (45) ist.

9. Röntgenrezeptor (1) gemäss einem der vorherigen Ansprüche, wobei die mindestens zwei Teilbereiche (21, 21') entsprechend den mindestens zwei Abbildungssystemen (3, 3') einander zumindest teilweise überlappen.

10. Röntgenrezeptor (1) gemäss einem der vorherigen Ansprüche, aufweisend eine flächige Anordnung von Mikrolinsen (22) zur Ausrichtung des vom Konverterschirm (2) abgestrahlten Lichts (23) in die Richtung der Abbildungssysteme (3, 3').

11. Röntgenrezeptor (1) gemäss einem der vorherigen Ansprüche, wobei ein Material des Konverterschirms (2) eine innere Struktur aufweist, welche im Konverterschirm erzeugtes Licht in die Richtung der Abbildungssysteme (3, 3') leitet.

12. Röntgenrezeptor (1) gemäss einem der vorherigen Ansprüche, aufweisend mindestens eine Strebe (54; 54'), welche diagonal durch ein Gehäuse (5) des Röntgenrezeptors (1) verläuft und sowohl eines der Reflektionsmittel (31; 31') trägt als auch zur Versteifung des Gehäuses (5) bewirkt.

13. Röntgenrezeptor (1) gemäss einem der vorherigen Ansprüche, aufweisend eine als Montageeinheit abnehmbare Frontblende (6), welche wiederum den Konverterschirm (2) und eine Deckplatte (62) mit hoher Röntgenstrahltransparenz aufweist.

14. Röntgenrezeptor (1) gemäss einem der vorherigen Ansprüche, aufweisend einen Versorgungsschlauch (7), welcher wiederum eine Schlauchhülle (71) und darin mindestens eine elektrische Versorgung (72) und eine Kühlmittelzuführung (74) aufweist, wobei ein zwischen der Kühlmittelzuführung (74) und der Schlauchhülle (71) liegender Zwischenbereich (75) zur Aufnahme der elektrische Versorgung (72) und zur Abführung des Kühlmittels dient.

15. Verfahren zur Ansteuerung eines Röntgengerätes, aufweisend die folgenden Schritte:
- Messen von zumindest einem Anteil einer Strahlungsmenge, die durch einen Spalt (4) zwischen Abbildungssystemen (3, 3') in einem Röntgenrezeptor (1) gemäss einem der Ansprüche 1 bis 12 tritt; und
- Steuerung des Röntgengerätes nach Massgabe des gemessenen Strahlungsanteils.

16. Verfahren gemäss Anspruch 15, wobei die Steuerung des Röntgengerätes umfasst: Steuerung einer Intensität einer Röntgenquelle.

17. Verfahren gemäss Anspruch 15 oder 16, wobei die Steuerung des Röntgengerätes umfasst: Steuerung einer Empfindlichkeit und/oder einer Auslesung eines elektronischen Umwandlungsmittels (33, 33').
